# EUROPEAN PATENT APPLICATION

(11) **EP 4 716 352 A1**
(43) Date of publication of application: **25.03.2026**
(21) Application number: 23936939.0
(22) Date of filing: 15.05.2023
(51) Int. Cl.: H04W 74/08

(54) **RANDOM ACCESS METHOD AND APPARATUS, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN); JIANG, Xiaowei, Beijing 100085 (CN); GAO, Xueyuan, Beijing 100085 (CN)
(74) Representative: Dehns Germany Partnerschaft mbB
(86) International application number: PCT/CN2023/094312
(87) International publication number: WO 2024/234252

(57) **Abstract**

The present disclosure provides a random access method and apparatus, and a storage medium, wherein the method comprises: in a random access occasion (RO) group, determining an initial RO for transmitting a physical random access channel (PRACH), the RO group comprising at least one RO; and starting from the initial RO, transmitting the PRACH to a base station. In the present disclosure, the terminal can determine from an RO group an initial RO for transmitting a PRACH, thereby clarifying terminal behavior, improving PRACH transmission performance, enhancing PRACH coverage, and simultaneously reducing random access time delay and having high availability.

## Description

### TECHNICAL FIELD

The present disclosure relates to the field of communication, and in particular, to a random access method and apparatus, and a storage medium.

### BACKGROUND

At present, in order to improve the success rate of random access, multiple physical random access channel transmissions (multiple PRACH transmissions) can be performed in the time domain, thereby achieving coverage enhancement of the physical random access channel (PRACH).

### SUMMARY

Embodiments of the present disclosure provide a random access method and apparatus, and a storage medium.

According to the first aspect of the embodiments of the present disclosure, a random access method is provided, the method being performed by a terminal and including:
determining an initial random access occasion (RO) for transmitting a physical random access channel (PRACH) in an RO group, where the RO group includes at least one RO; and
transmitting the PRACH to a base station starting from the initial RO.

Optionally, the method further includes:
receiving indication information sent by the base station, where the indication information is used to determine the initial RO.

Optionally, the indication information is used to indicate multiple bit values, and determining the initial random access occasion (RO) for transmitting the physical random access channel (PRACH) in the RO group includes:
in the RO group, determining an RO whose corresponding bit value is a first value as the initial RO.

Optionally, the indication information is used to indicate a first number, and determining the initial random access occasion (RO) for transmitting the physical random access channel (PRACH) in the RO group includes:
in the RO group, determining ROs of the first number according to an order of time domain positions from front to back; and
determining any one of the ROs of the first number as the initial RO.

Optionally, determining the initial random access occasion (RO) for transmitting the physical random access channel (PRACH) in the RO group includes:
in the RO group, determining the initial RO based on protocol agreement.

Optionally, in the RO group, determining the initial RO based on the protocol agreement includes any of:
determining a first RO in the RO group as the initial RO;
determining any one RO in the RO group as the initial RO;
determining any RO except a last RO in the RO group as the initial RO.

Optionally, determining the initial random access occasion (RO) for transmitting the physical random access channel (PRACH) in the RO group includes:
determining the initial RO based on a number of ROs included in the RO group.

Optionally, determining the initial RO based on the number of ROs included in the RO group includes:
determining a second number based on the number of ROs included in the RO group, where the second number is smaller than the number of ROs;
in the RO group, determining ROs of the second number according to an order of time domain positions from front to back;
determining any one of the ROs of the second number as the initial RO.

Optionally, determining the second number based on the number of ROs included in the RO group includes:
determining a quotient of the number of ROs and a second value, the second value being greater than 1; and
determining that the second number is equal to a third value, where the third value is a value obtained by rounding the quotient.

Optionally, determining the second number based on the number of ROs included in the RO group includes:
based on a corresponding relationship between the number of ROs and the second number, determining the second number.

Optionally, the RO included in the RO group is a valid RO.

Optionally, the method further includes:
receiving configuration information sent by a base station, where the configuration information is used to configure one or more numbers of times of transmitting the PRACH;
determining a first number of times of transmitting the PRACH among the one or more numbers of times of transmitting the PRACH;
based on the first number of times, determining the RO group in multiple RO groups, where different numbers of times of transmitting the PRACH correspond to different RO groups, and different RO groups include different numbers of ROs.

Optionally, determining the first number of times of transmitting the PRACH among the number of times configured by the configuration information includes:
determining a reference signal received power (RSRP) value;
determining one or more RSRP thresholds, where different RSRP thresholds correspond to different numbers of times of transmitting the PRACH; and
determining the first number of times based on a comparison result of the RSRP value and the RSRP threshold.

According to the second aspect of the embodiments of the present disclosure, a random access method is provided, where the method is performed by a base station, and includes:
in a random access occasion (RO) group, determining a termination RO, where the RO group includes at least one RO, and the termination RO is an RO in the RO group for performing combined detection of a physical random access channel (PRACH); and
performing the combined detection of the PRACH on the termination RO. 15. The method according to claim 14, where the termination RO is any one of:
   a last RO in the RO group;
   a last RO in the RO group on which the PRACH is actually transmitted by the terminal.

Optionally, the RO included in the RO group is a valid RO.

Optionally, the method further includes:
sending indication information to the terminal, where the indication information is used by the terminal to determine an initial RO.

Optionally, the indication information is used to indicate any of:
multiple bit values, where the multiple bit values correspond one-to-one to each RO in the RO group;
a first number.

Optionally, the method further includes:
sending configuration information to a terminal, where the configuration information is used to configure one or more numbers of times of transmitting the PRACH.

According to the third aspect of the embodiments of the present disclosure, a random access apparatus is provided, where the apparatus is applied to a terminal, and includes:
a first determining module, configured to determine an initial random access occasion (RO) for transmitting a physical random access channel (PRACH) in an RO group, where the RO group includes at least one RO; and
a first sending module, configured to transmit the PRACH to a base station starting from the initial RO.

According to the fourth aspect of the embodiments of the present disclosure, a random access apparatus is provided, where the apparatus is applied to a base station, and includes:
a second determining module, configured to determine a termination random access occasion (RO) in an RO group, where each of the RO group includes at least one RO, and the termination RO is an RO in the RO group for performing combined detection of a physical random access channel (PRACH); and
a detection module, configured to perform the combined detection of the PRACH on the termination RO.

According to the fifth aspect of the embodiments of the present disclosure, a computer-readable storage medium is provided, where the storage medium stores a computer program, and the computer program is used to execute any one of the random access methods described above.

According to the sixth aspect of the embodiments of the present disclosure, a random access apparatus is provided, including:
a processor; and
a memory for storing instructions executable by the processor;
where the processor is configured to execute any of the random access methods described above on the terminal side.

According to the seventh aspect of the embodiments of the present disclosure, a random access apparatus is provided, including:
a processor; and
a memory for storing instructions executable by the processor;
where the processor is configured to execute any one of the random access methods described above on the base station side.

The technical solutions provided by the embodiments of the present disclosure may have the following beneficial effects.

In the present disclosure, the terminal can determine the initial RO for transmitting PRACH from the RO group, which clarifies the terminal behavior, improves the PRACH transmission performance and achieves PRACH coverage enhancement, while reducing random access delay and having high availability.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
FIG. 1 is a schematic diagram of a flowchart of a random access method according to an exemplary embodiment.
FIG. 2 is a schematic flowchart of another random access method according to an exemplary embodiment.
FIG. 3 is a schematic flowchart of another random access method according to an exemplary embodiment.
FIG. 4 is a schematic flowchart of another random access method according to an exemplary embodiment.
FIG. 5 is a block diagram of a random access apparatus according to an exemplary embodiment.
FIG. 6 is a block diagram of another random access apparatus according to an exemplary embodiment.
FIG. 7 is a schematic structural diagram of a random access apparatus according to an exemplary embodiment of the present disclosure.
FIG. 8 is a schematic structural diagram of another random access apparatus according to an exemplary embodiment of the present disclosure.

### DETAILED DESCRIPTION

Exemplary embodiments will be described in detail herein, examples of which are shown in the accompanying drawings. When the following description refers to the drawings, the same numbers in different drawings represent the same or similar elements unless otherwise indicated. The implementations described in the following exemplary embodiments do not represent all implementations consistent with the present disclosure. Instead, they are merely examples of apparatuses and methods consistent with some aspects of the present disclosure as detailed in the appended claims.

The terms used in the present disclosure are for the purpose of describing specific embodiments only and are not intended to limit the present disclosure. The singular forms of "a/an", "said" and "the" used in the present disclosure and the appended claims are also intended to include plural forms unless the context clearly indicates otherwise. It should also be understood that the term "and/or" used herein refers to and includes any or all possible combinations of at least one associated listed item.

It should be understood that although the terms first, second, third, etc. may be used in the present disclosure to describe various information, such information should not be limited to these terms. These terms are only used to distinguish the same type of information from each other. For example, without departing from the scope of the present disclosure, a first message may also be referred to as a second message, and similarly, a second message may also be referred to as a first message. Depending on the context, the word "if" as used herein may be interpreted as "at the time of" or "when" or "in response to determining".

In the present disclosure, a terminal may select ROs included in an RO group to perform multiple PRACH transmissions. However, considering that the number of ROs included in the RO group is multiple, the terminal cannot determine the initial RO of the PRACH transmission, resulting in uncertain terminal behavior.

In order to solve the above technical problem, the present disclosure provides the following random access method and apparatus, and storage medium.

The following first introduces the random access method provided by the present disclosure from the terminal side.

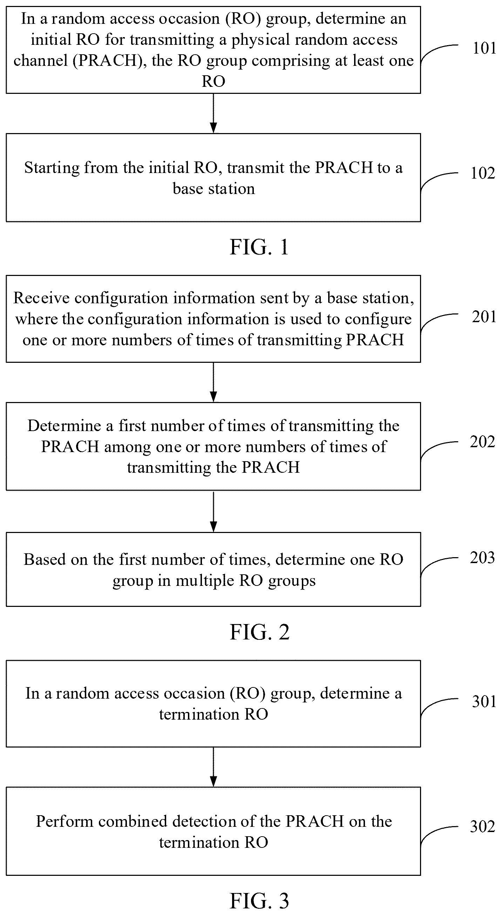

The embodiment of the present disclosure provides a random access method, as shown in FIG. 1, which is a flowchart of a random access method according to an embodiment, which can be performed by a terminal. The method may include the following steps.

In step 101, in a random access occasion (RO) group, an initial RO for transmitting a physical random access channel (PRACH) is determined, where the RO group includes at least one RO.

In the embodiment of the present disclosure, the RO includes a time domain resource and a frequency domain resource that can be occupied by the terminal when transmitting PRACH. The RO group includes at least one RO. The initial RO is the RO in the RO group determined by the terminal that can be used for the first PRACH transmission, where the first PRACH transmission is the first transmission among multiple PRACH transmissions.

In the embodiments of the present disclosure, the RO group may be determined by the terminal based on the protocol and/or determined by the terminal based on configuration of the base station, which is not limited in the present disclosure. It should be noted that the RO included in the RO group should be a valid RO, which means an RO that does not conflict with a downlink symbol or a synchronization signal block (Synchronization Signal/PBCH Block, SSB).

In the embodiment of the present disclosure, the terminal may determine the initial RO in, but not limited to, any of the following manners.

The first manner is to determine the initial RO based on the indication of the base station.

In this manner, the terminal may receive indication information sent by the base station, and the indication information is used by the terminal to determine the initial RO.

In one example, the indication information is used to indicate multiple bit values, each bit value corresponding to one RO in the RO group. Exemplarily, the indication information indicates multiple bit values in a bitmap manner. For example, the RO group includes 4 ROs, and the indication information sent by the base station occupies 4 bits.

The terminal determines, in the RO group, an RO whose corresponding bit value is a first value as the initial RO, where the first value is "1" or "0", which is not limited in the present disclosure.

For example, the RO group includes 4 ROs, the indication information indicates 4 bit values in a bitmap manner, which are 1000 in sequence, and the first value is "1", then the terminal determines the first RO in the RO group as the initial RO.

It should be noted that in the bitmap, only the bit value corresponding to the initial RO indicated by the base station is the first value, and the bit values corresponding to other ROs are the second value. The first value is different from the second value.

In another example, the base station may directly indicate an index value of the initial RO through the indication information.

Exemplarily, the RO group includes 4 ROs, the indication information sent by the base station is 001, and the terminal determines the RO with an index value of 1 as the initial RO according to the indication information, that is, determines the first RO in the RO group as the initial RO.

In another example, the indication information is used to indicate a first number, and it is assumed that the first number is M. In the RO group, the terminal selects the first M RO(s) according to the order of time domain positions from front to back, and any one of the M RO(s) can be determined as the initial RO.

For example, when M is 2, the terminal may use the first RO or the second RO in the RO group as the initial RO.

In another example, if the terminal does not receive the indication information, it can determine the initial RO based on the subsequent second manner, that is, based on the protocol agreement. Alternatively, the terminal can determine the initial RO based on the subsequent third manner, that is, based on the number of ROs included in the RO group.

Exemplarily, the terminal determines that the high-level signaling, the Radio Resource Control (RRC) signaling or the System Information Block (SIB) signaling configured by the base station, such as SIB1, does not include the indication information, it means that the terminal has not received the indication information.

The second manner is to determine the initial RO based on the protocol agreement.

Exemplarily, the protocol stipulates that the terminal can only determine the first RO in the RO group as the initial RO, then the terminal determines the first RO in the RO group as the initial RO based on the protocol agreement.

Exemplarily, the protocol stipulates that the terminal can select any one of the ROs in the RO group as the initial RO, and then the terminal determines any one of the ROs in the RO group as the initial RO based on the protocol agreement.

Exemplarily, the protocol stipulates that the terminal can determine any RO except the last RO as the initial RO, then the terminal determines any RO except the last RO in the RO group as the initial RO based on the protocol agreement.

The above is only the exemplary description, and all solutions for the terminal to determine the initial RO based on the protocol agreement should fall within the protection scope of the present disclosure.

For the terminal, the initial RO position may be determined directly based on the protocol agreement, or the initial RO may be determined based on the protocol agreement in the case that the indication information sent by the base station is not received.

The third solution is to determine the initial RO based on the number of RO(s) included in the RO group.

In the embodiment of the present disclosure, the terminal may first determine a second number based on the number of ROs included in the RO group, where the second number is smaller than the number of ROs. Further, the terminal may select RO(s) of the second number in the RO group in a time domain position order from front to back, and then determine any one of the RO(s) of the second number as the initial RO.

In one example, the terminal may first calculate the quotient of the number of ROs and a second value, and the second value is greater than 1. Exemplarily, the second value may be an integer or a non-integer, which is not limited in the present disclosure. The second value may be agreed upon by a protocol or configured by a base station, which is not limited in the present disclosure.

Further, the terminal determines a third value obtained by rounding down the quotient. The terminal may also obtain the third value by rounding the quotient upwards, which is not limited in the present disclosure. The second number is equal to the third value.

For example, the second value is 2, the number of ROs is N, the quotient is N/2, and after rounding down or up it is still N/2, then the second number L=N/2.

The terminal determines any one of the first N/2 RO(s) in the RO group, that is, the first N/2 valid RO(s) in the RO group as the initial RO.

In another example, the corresponding relationship between the number of ROs and the second number may be agreed upon by a protocol or configured by a base station. The corresponding relationship may be shown in Table 1, for example.

**Table 1**

| Number of ROs included in the RO group | Second number |
|---|---|
| 2 | L₁ |
| 4 | L₂ |
| 8 | L₃ |
| ...... | ...... |

Each row of Table 1 can be set individually or in combination, which is not limited by the present disclosure. In addition, L₁, L₂, and L₃ can be equal or unequal to each other, which is not limited by the present disclosure, either. L₁, L₂, and L₃ need to be smaller than the corresponding number of ROs.

In the present disclosure, the terminal determines the second number corresponding to the number of ROs included in the RO group based on Table 1. Assuming that the second number is L₁, the terminal may determine any one of the first L₁ ROs in the RO group as the initial RO.

In the embodiments of the present disclosure, the terminal may directly determine the initial number of ROs based on the number of ROs included in the RO group, or may determine the initial number of ROs based on the number of ROs included in the RO group in the case that the indication information sent by the base station is not received, which is not limited by the present disclosure.

It can be understood that the above manners for determining the initial RO are all exemplary descriptions, and all solutions for the terminal to determine the initial RO in the RO group should fall within the protection scope of the present disclosure.

In step 102, the PRACH is transmitted to a base station starting from the initial RO.

After determining the initial RO, the terminal may transmit the PRACH to the base station starting from the initial RO.

In the above embodiment, the terminal can determine the initial RO for transmitting PRACH from the RO group, which clarifies the terminal behavior, improves the PRACH transmission performance and realizes PRACH coverage enhancement, while reducing the random access delay and having high availability.

In some optional embodiments, referring to FIG. 2, FIG. 2 is a flowchart of a random access method according to an embodiment, the method may be performed by a terminal. The method may include the following steps.

In step 201, configuration information sent by a base station is received, where the configuration information is used to configure one or more numbers of times of transmitting a PRACH.

In a possible implementation manner, the configuration information sent by the base station is a SIB, illustratively, may be SIBn, where n may be a positive integer.

The base station may select one or more numbers of times from the transmission times set and send them to the terminal through configuration information. For example, the transmission times set is {2, 4, 8}, and the numbers of times selected by the base station include 2 and 4. Further, the base station may send 2 and 4 to the terminal through configuration information.

In step 202, a first number of times of transmitting the PRACH is determined among the one or more numbers of times of transmitting the PRACH.

After receiving the configuration information, the terminal may determine the first number of times of actually transmitting the PRACH based on one or more numbers of times configured by the configuration information.

In one example, the terminal may determine the first number of times based on a Reference Signal Receiving Power (RSRP) value.

The terminal first measures the current RSRP value and determines one or more RSRP thresholds, and different RSRP thresholds correspond to different numbers of times of transmitting PRACH. The RSRP threshold can be agreed upon by the protocol or configured by the base station, which is not limited by the present disclosure.

Exemplarily, RSRP threshold #1, RSRP threshold #2, RSRP threshold #3,... may be sequentially increased or decreased. Different RSRP thresholds correspond to different numbers of times of PRACH transmission.

The terminal may determine the first number of times based on a comparison result between the RSRP value and the RSRP threshold. Specifically, the terminal determines one RSRP threshold that meets a condition, and determines the number of times corresponding to the determined RSRP threshold as the first number of times.

The determined RSRP threshold is greater than or equal to the current RSRP value, and when there are multiple RSRP thresholds greater than or equal to the current RSRP value, the minimum value of the multiple RSRP thresholds is determined as the RSRP threshold that meets the condition.

For example, RSRP threshold #1, RSRP threshold #2, and RSRP threshold #3 are all greater than or equal to the current RSRP value, where the smallest RSRP threshold is RSRP threshold #1, the number of times corresponding to RSRP threshold #1 is 8, and the terminal determines that the first number of times is 8.

For another example, RSRP threshold #2 and RSRP threshold #3 are both greater than or equal to the current RSRP value, where the smallest RSRP threshold is RSRP threshold #1, and the corresponding number of times is 8, the largest RSRP threshold is RSRP threshold #3, and its corresponding number of times is 2, and the number of times corresponding to RSRP threshold #2 is 4, then the terminal determines the first number of times to be 4, and so on.

In step 203, based on the first number of times, one RO group is determined in multiple RO groups.

In the embodiment of the present disclosure, different numbers of times of transmitting the PRACH correspond to different RO groups, and the different RO groups include different numbers of ROs.

It should be noted that the RO(s) included in the RO group is a valid RO, and the number of valid ROs included in different RO groups is also different.

After the terminal determines the first number of times, it can determine the RO group corresponding to the first number of times among multiple RO groups. For example, the number of times 2 corresponds to RO group #1, the number of times 4 corresponds to RO group #2, the number of times 8 corresponds to RO group #3,..., and RO group #1 includes 2 ROs, RO group #2 includes 4 ROs, RO group #3 includes 8 ROs,.... If the first number of times is 4, the terminal determines RO group #2 as the RO group to be used.

Further, the terminal may perform the above steps 101 to 102 (not shown in FIG. 2), determine an initial RO in the determined RO group, and transmit the PRACH to the base station starting from the initial RO.

In the above embodiment, the terminal can quickly determine the first number of times the PRACH is transmitted, determine the RO group according to the first number of times, and determine the initial RO for transmitting the PRACH from the RO group, which clarifies the terminal behavior, improves the PRACH transmission performance and realizes PRACH coverage enhancement, while reducing the random access delay and having high availability.

The random access method provided by the present disclosure is introduced below from the base station side.

The present disclosure provides a random access method, as shown in FIG. 3, which is a flowchart of a random access method according to an embodiment, the method can be performed by a base station. The method may include the following steps.

In step 301, in a random access occasion (RO) group, a termination RO is determined.

In the embodiment of the present disclosure, the base station may keep monitoring each RO in each RO group so as to timely receive the PRACH sent by the terminal.

The RO group includes at least one RO, and the termination RO is an RO in the RO group that performs combined detection of PRACH.

In the embodiments of the present disclosure, the RO group can be determined by the base station based on the protocol and/or configured by the base station, which is not limited in the present disclosure. It should be noted that the RO included in the RO group should be a valid RO, and the valid RO means an RO that does not conflict with a downlink symbol or SSB.

Exemplarily, if the base station pre-configures an RO group for the terminal, when subsequently scheduling downlink symbol transmission or transmitting SSB, the base station side needs to ensure that there is no conflict with the RO(s) in the RO group.

Exemplarily, if an RO group is agreed upon by the protocol, the base station needs to ensure that there is no conflict with the RO(s) in the RO group when subsequently scheduling downlink symbol transmission or transmitting SSB.

In the embodiments of the present disclosure, after receiving the PRACH sent by the terminal on a certain RO of the RO group, the base station does not immediately perform PRACH detection, but performs combined detection on multiple PRACHs sent by the terminal on the termination RO.

In one example, the termination RO may be the last RO in the RO group, that is, the termination RO is the last valid RO in the RO group.

For example, the RO group includes 4 ROs, and the base station receives the PRACH sent by the terminal on the first and second ROs respectively, but the base station performs combined detection of the PRACH on the fourth RO.

In another example, the termination RO may be the last RO for the terminal to actually transmit the PRACH, that is, the termination RO is the last valid RO in the RO group for the terminal to actually transmit the PRACH.

For example, the RO group includes 4 ROs, and the base station receives PRACH sent by the terminal on the first and second ROs respectively. The base station determines that the number of times the terminal actually transmits PRACH is the first number of times, and the first number of times is 2. Then the base station can perform combined detection of PRACH on the second RO.

It should be noted that the way the base station determines the first number of times is similar to the way the terminal determines the first number of times. Specifically, the base station can measure the current RSRP value. In addition, the base station can determine one or more RSRP thresholds. By comparing the current RSRP value with the RSRP threshold, the base station can determine the first number of times the terminal actually transmits PRACH.

In step 302, a combined detection of the PRACH is performed on the termination RO.

In the above embodiment, the base station can perform combined detection of PRACH on the determined termination RO. Through combined detection of PRACH, PRACH coverage enhancement is supported, the success rate of random access of the terminal is effectively improved, and high availability is achieved.

In some optional embodiments, the base station may send indication information to the terminal, where the indication information is used by the terminal to determine the initial RO.

In one example, the indication information may be used to indicate multiple bit values, and the multiple bit values correspond one-to-one to each RO in the RO group. Specifically, the base station may send the indication information in a bitmap manner, where the bit value corresponding to the initial RO indicated by the base station is a first value, and the bit values corresponding to other ROs are second values, the first value may be "1" or "0", and accordingly, the second value is different from the first value and may be "0" or "1".

In one example, the indication information may be used for an index value of the initial RO.

In another example, the indication information may be used to indicate the first number. The terminal may determine any one of the ROs of the first number in the RO group as the initial RO.

The above is only an exemplary description, and all methods in which the base station sends indication information to allow the terminal to determine the initial RO should fall within the protection scope of the present disclosure.

In an example, the indication information may be sent to the terminal via high-layer signaling, such as RRC signaling or SIB, such as SIB1.

In the above embodiment, the base station can indicate the initial RO to the terminal so that the terminal can determine the initial RO for transmitting PRACH from the RO group, which clarifies the terminal behavior, improves the PRACH transmission performance and realizes PRACH coverage enhancement, while reducing random access delay and having high availability.

In some optional embodiments, the base station may send configuration information to the terminal, where the configuration information is used to configure one or more numbers of times of transmitting the PRACH.

Exemplarily, the base station may select one or more numbers of times from one transmission times set, and send the selected numbers of times to the terminal through configuration information, where the configuration information may be SIB, specifically SIBn, where n is a positive integer.

In the above embodiment, the base station may configure the number of times of PRACH transmission for the terminal, and multiple PRACH transmissions may be implemented through base station scheduling, which is simple to implement and has high availability.

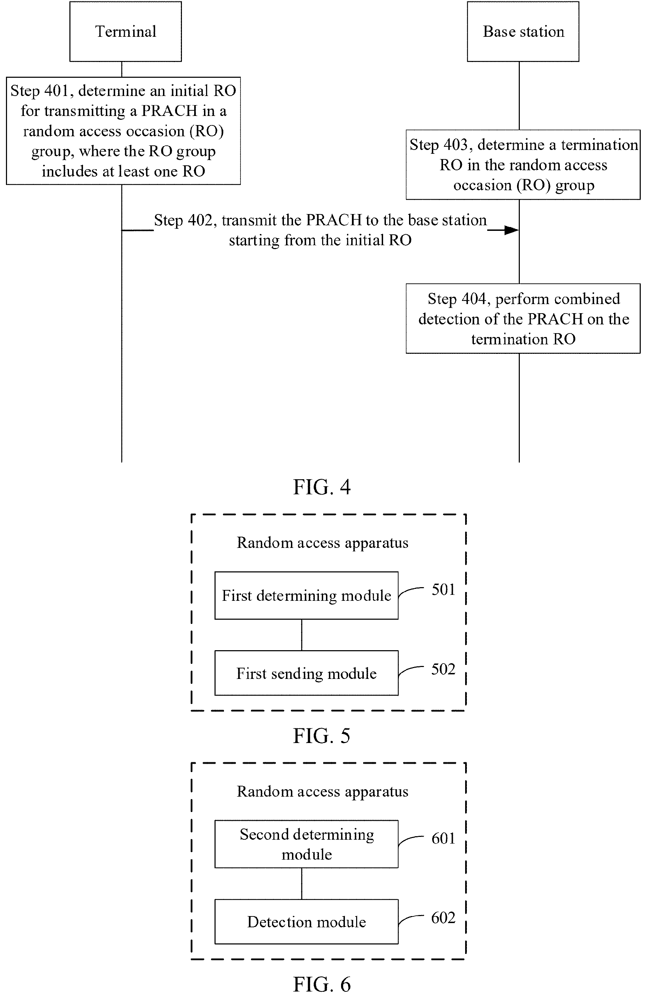

In some optional embodiments, referring to FIG. 4, FIG. 4 is a flowchart of a random access method according to an embodiment, and the method may include the following steps.

In step 401, the terminal determines an initial RO for transmitting a PRACH in a random access occasion (RO) group, where the RO group includes at least one RO.

The implementation of step 401 is similar to that of step 101 above, and will not be described again here.

In step 402, the terminal transmits the PRACH to the base station starting from the initial RO.

In step 403, the base station determines a termination RO in the random access occasion (RO) group.

The implementation of step 403 is similar to that of step 301 above, and will not be described in detail here.

In step 404, the base station performs combined detection of the PRACH on the termination RO.

The implementation of step 404 is similar to that of step 302 above, and will not be described in detail here.

In the above embodiment, the terminal can determine the initial RO for transmitting PRACH from the RO group, which clarifies the terminal behavior, improves the PRACH transmission performance and achieves PRACH coverage enhancement, while reducing the random access delay. In addition, the base station can perform combined detection of PRACH on the determined termination RO. Through the combined detection of PRACH, PRACH coverage enhancement is supported, the success rate of random access of the terminal is effectively improved, and high availability is realized.

The above scheme is further illustrated as follows.

In the present disclosure, the terminal may determine the initial RO position in the RO group by one or more combinations of the following manner.

First manner: based on protocol agreement, the terminal can only select the first RO in the RO group as the initial RO of multiple PRACH transmissions.

Second manner: based on the protocol agreement, the terminal selects any RO in one RO group as the initial RO of multiple PRACH transmissions.

Optionally, the last RO in the RO group cannot be used as the initial RO.

Third manner: the terminal determines the initial RO that can be used as the multiple PRACH transmissions based on the number of ROs N included in the RO group and the protocol agreed rule.

For example, assuming there are N ROs in one RO group, it is determined by the protocol agreed rule that any one of the first N/2 ROs can be used as the initial RO for multiple PRACH transmissions.

For another example, different RO groups including different numbers of ROs have different determination manners.

If one RO group contains 2 ROs, any of the first L₁ ROs can be used as the initial RO for multiple PRACH transmissions.

If one RO group contains 4 ROs, any of the first L₂ ROs can be used as the initial RO for multiple PRACH transmissions.

If one RO group contains 8 ROs, any of the first L₃ ROs can be used as the initial RO for multiple PRACH transmissions.

Any two of L₁, L₂, and L₂ may be equal or unequal.

Fourth manner: for an RO group containing any number of ROs, the initial RO may be configured or indicated by the base station.

For example, the base station may send the indication information in a bitmap manner, or the base station may indicate the first number, or the base station may indicate the index value of the initial RO.

If the base station does not send configuration information to the terminal, the terminal can only select the first RO in one RO group as the initial RO of the multiple PRACH transmission based on the protocol agreement.

In one example, the RO included in the above RO group is a valid RO.

In one example, different numbers of times of transmitting PRACH correspond to different RO groups, and the different RO groups include different numbers of ROs, that is, the number of valid ROs included in the RO group is different.

In an example, the terminal determines the first number of times for multiple PRACH transmissions based on a certain condition, and selects a corresponding RO group based on the first number of times.

For example, different RSRP thresholds correspond to different numbers of times of transmitting the PRACH. The terminal compares the RSRP value with the RSRP threshold and determines the corresponding first number of times based on the comparison result.

In one example, the base station side always performs combined detection of PRACH based on the termination RO in the RO group, where the termination RO is the last valid RO in the RO group, or the last valid RO where the terminal actually transmits PRACH.

The above is only an exemplary description, and all solutions in which the terminal determines the initial RO and performs multiple PRACH transmissions should fall within the protection scope of the present disclosure.

In the above embodiment, the terminal can determine the initial RO for transmitting PRACH from the RO group, which clarifies the terminal behavior, improves the PRACH transmission performance and achieves PRACH coverage enhancement, while reducing the random access delay. In addition, the base station can perform combined detection of PRACH on the determined termination RO. Through the combined detection of PRACH, PRACH coverage enhancement is supported, the success rate of random access of the terminal is effectively improved, and high availability is achieved.

Corresponding to the aforementioned application function implementation method embodiments, the present disclosure also provides application function implementation apparatus embodiments.

Referring to FIG. 5, which is a block diagram of a random access apparatus according to an exemplary embodiment, the apparatus is applied to a terminal and includes:
a first determining module 501, configured to determine an initial RO for transmitting a physical random access channel (PRACH) in a random access occasion (RO) group, where the RO group includes at least one RO;
a first sending module 502, configured to transmit the PRACH to the base station starting from the initial RO.

Optionally, the apparatus further includes (not shown in FIG. 5):
a first receiving module, configured to receive indication information sent by the base station, where the indication information is used to determine the initial RO.

Optionally, the indication information is used to indicate multiple bit values, and the first determining module 501 includes:
a first determining submodule, configured to determine, in the RO group, an RO whose corresponding bit value is a first value as the initial RO.

Optionally, the first determining module 501 includes:
a second determining submodule, configured to determine ROs of the first number in the RO group according to an order of time domain positions from front to back;
a third determining submodule, configured to determine any one of the ROs of the first number as the initial RO.

Optionally, the first determining module 501 includes:
a fourth determining submodule, configured to determine the initial RO in the RO group based on a protocol agreement.

Optionally, the fourth determining submodule is further configured to perform any one of the following:
determining the first RO in the RO group as the initial RO;
determining any one RO in the RO group as the initial RO;
determining any RO except the last RO in the RO group as the initial RO.

Optionally, the first determining module 501 includes:
a fifth determining submodule, configured to determine the initial RO based on the number of ROs included in the RO group.

Optionally, the fifth determining submodule is further configured to:
determine a second number based on the number of ROs included in the RO group, the second number being smaller than the number of ROs;
in the RO group, determining ROs of the second number according to the order of time domain positions from front to back;
determining any one of the ROs of the second number as the initial RO.

Optionally, the fifth determining submodule is further configured to:
determine a quotient of the number of RO(s) and a second value, the second value being greater than 1;
determine that the second number is equal to a third value, where the third value is a value obtained by rounding the quotient.

Optionally, the fifth determining submodule is further configured to:
based on a corresponding relationship between the number of ROs and the second number, determine the second number.

Optionally, the RO(s) included in the RO group is a valid RO.

Optionally, the apparatus further includes (not shown in FIG. 5):
a second receiving module, configured to receive configuration information sent by the base station, where the configuration information is used to configure one or more numbers of times of transmitting the PRACH;
a third determining module, configured to determine a first number of times of transmitting the PRACH among the one or more numbers of times of transmitting the PRACH;
a fourth determining module, configured to determine the RO group among multiple RO groups based on the first number of times, where different numbers of times of transmitting the PRACH correspond to different RO groups, and different RO groups include different number of ROs.

Optionally, the third determining module includes:
a sixth determination submodule, configured to determine a reference signal received power (RSRP) value;
a seventh determination submodule, configured to determine one or more RSRP thresholds, where different RSRP thresholds correspond to different numbers of times of transmitting the PRACH;
an eighth determination submodule, configured to determine the first number of times based on a comparison result between the RSRP value and the RSRP threshold.

Referring to FIG. 6, which is a block diagram of a random access apparatus according to an exemplary embodiment, the apparatus is applied to a base station and includes:
a second determining module 601, configured to determine a termination RO in a random access occasion (RO) group, where each of the RO groups includes at least one RO, and the termination RO is an RO in the RO group on which combined detection of the physical random access channel (PRACH) is performed;
a detection module 602, configured to perform combined detection of the PRACH on the termination RO.

Optionally, the termination RO is any one of the following:
the last RO in the RO group;
the last RO of the PRACH actually transmitted by the terminal in the RO group.

Optionally, the RO included in the RO group is a valid RO.

Optionally, the apparatus further includes (not shown in FIG. 6):
a second sending module, configured to send indication information to the terminal, where the indication information is used by the terminal to determine the initial RO.

Optionally, the indication information is used to indicate any of the following:
multiple bit values, where the multiple f bit values correspond one-to-one to each RO in the RO group;
a first number.

Optionally, the apparatus further includes (not shown in FIG. 6):
a third sending module, configured to send configuration information to the terminal, where the configuration information is used to configure one or more numbers of times of transmitting the PRACH.

As for the apparatus embodiments, since they basically correspond to the method embodiments, the relevant parts can be referred to the partial description of the method embodiments. The apparatus embodiments described above are only illustrative, where the units described as separate components may or may not be physically separated, and the components shown as units may or may not be physical units, that is, they may be located in one place, or they may be distributed on multiple network units. Some or all of the modules can be selected according to actual needs to achieve the purpose of the solutions of the present disclosure. Ordinary technicians in this field can understand and implement it without creative work.

Correspondingly, the present disclosure also provides a computer-readable storage medium, which stores a computer program, and the computer program is used to execute any of the random access methods described above on the terminal side.

Correspondingly, the present disclosure also provides a computer-readable storage medium, which stores a computer program, and the computer program is used to execute any of the random access methods described above on the base station side.

Accordingly, the present disclosure also provides a random access apparatus, comprising:
a processor; and
a memory for storing instructions executable by the processor;
where the processor is configured to execute any of the random access methods described above on the terminal side.

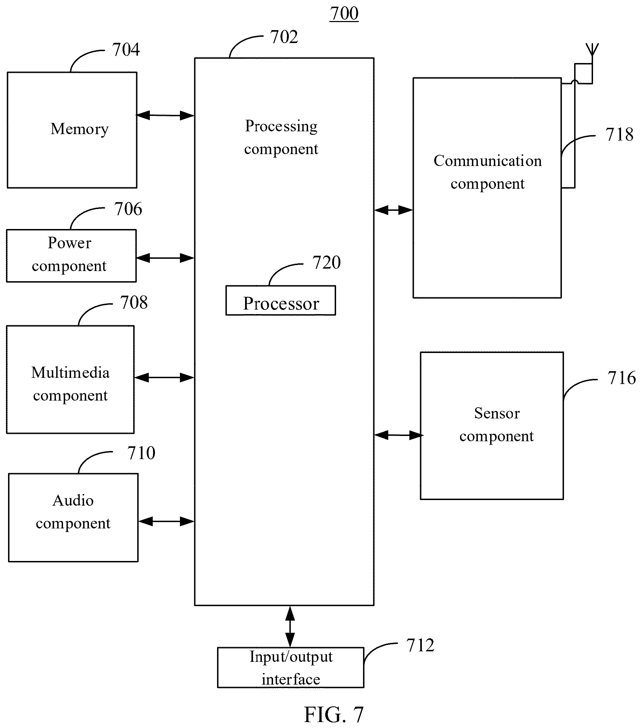

FIG. 7 is a block diagram of an electronic device 700 according to an exemplary embodiment. For example, the electronic device 700 may be a mobile phone, a tablet computer, an e-book reader, a multimedia player, a wearable device, a vehicle-mounted terminal, an iPad, a smart TV, or other terminals.

Referring to FIG. 7, the electronic device 700 may include one or more of the following components: a processing component 702, a memory 704, a power component 706, a multimedia component 708, an audio component 710, an input/output (I/O) interface 712, a sensor component 716, and a communication component 718.

The processing component 702 generally controls the overall operation of the electronic device 700, such as operations associated with display, phone calls, data communications, camera operations, and recording operations. The processing component 702 may include one or more processors 720 to execute instructions to complete all or part of the steps of the random access methods described above. In addition, the processing component 702 may include one or more modules to facilitate the interaction between the processing component 702 and other components. For example, the processing component 702 may include a multimedia module to facilitate the interaction between the multimedia component 708 and the processing component 702. For another example, the processing component 702 may read executable instructions from a memory to implement the steps of the random access methods provided in the above embodiments.

The memory 704 is configured to store various types of data to support operations on the electronic device 700. Examples of such data include instructions for any application or method operating on the electronic device 700, contact data, phone book data, messages, pictures, videos, etc. The memory 704 can be implemented by any type of volatile or non-volatile storage device or a combination thereof, such as a static random access memory (SRAM), an electrically erasable programmable read-only memory (EEPROM), an Erasable Programmable Read-Only Memory (EPROM), a Programmable Read-Only Memory (PROM), Read-Only Memory (ROM), a magnetic memory, a flash memory, a magnetic or optical magnetic disk.

The power component 706 provides power to the various components of the electronic device 700. The power component 706 may include a power management system, one or more power supplies, and other components associated with generating, managing, and distributing power to the electronic device 700.

The multimedia component 708 includes a display screen that provides an output interface between the electronic device 700 and the user. In some embodiments, the multimedia component 708 includes a front camera and/or a rear camera. When the electronic device 700 is in an operating mode, such as a shooting mode or a video mode, the front camera and/or the rear camera can receive external multimedia data. Each front camera and rear camera can be a fixed optical lens system or have a focal length and optical zoom capability.

The audio component 710 is configured to output and/or input audio signals. For example, the audio component 710 includes a microphone (MIC), and when the electronic device 700 is in an operating mode, such as a call mode, a recording mode, and a voice recognition mode, the microphone is configured to receive an external audio signal. The received audio signal can be further stored in the memory 704 or sent via the communication component 718. In some embodiments, the audio component 710 also includes a speaker for outputting audio signals.

The I/O interface 712 provides an interface between the processing component 702 and peripheral interface modules, such as keyboards, click wheels, buttons, etc. These buttons may include but are not limited to: a home button, a volume button, a start button, and a lock button.

The sensor assembly 716 includes one or more sensors for providing various aspects of status assessment for the electronic device 700. For example, the sensor assembly 716 can detect the open/closed state of the electronic device 700, the relative positioning of components, such as the display and keypad of the electronic device 700, and the sensor assembly 716 can also detect the position change of the electronic device 700 or a component of the electronic device 700, the presence or absence of contact between the user and the electronic device 700, the orientation or acceleration/deceleration of the electronic device 700, and the temperature change of the electronic device 700. The sensor assembly 716 may include a proximity sensor configured to detect the presence of nearby objects without any physical contact. The sensor assembly 716 may also include an optical sensor, such as a CMOS or CCD image sensor, for use in imaging applications. In some embodiments, the sensor assembly 716 may also include an acceleration sensor, a gyroscope sensor, a magnetic sensor, a pressure sensor, or a temperature sensor.

The communication component 718 is configured to facilitate wired or wireless communication between the electronic device 700 and other devices. The electronic device 700 can access a wireless network based on a communication standard, such as Wi-Fi, 2G, 3G, 4G or 5G, or a combination thereof. In an exemplary embodiment, the communication component 718 receives a broadcast signal or broadcast-related information from an external broadcast management system via a broadcast channel. In an exemplary embodiment, the communication component 718 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an exemplary embodiment, the electronic device 700 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above-mentioned random access methods.

In an exemplary embodiment, a non-transitory machine-readable storage medium including instructions is also provided, such as a memory 704 including instructions, and the instructions can be executed by a processor 720 of an electronic device 700 to perform the random access methods described above. For example, the non-transitory computer-readable storage medium can be a ROM, a random access memory (RAM), a CD-ROM, a magnetic tape, a floppy disk, an optical data storage device, and the like.

Accordingly, the present disclosure also provides a random access apparatus, comprising:
a processor;
a memory for storing instructions executable by the processor;
where the processor is configured to execute any of the random access methods described above on the base station side.

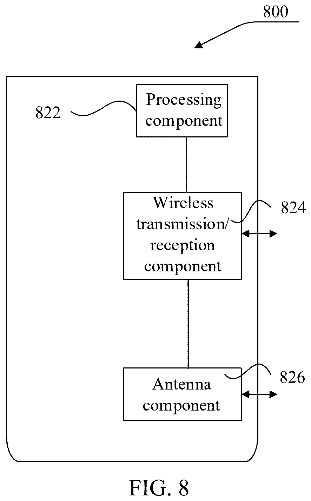

As shown in FIG. 8, FIG. 8 is a schematic diagram of a random access apparatus 800 according to an exemplary embodiment. The apparatus 800 may be provided as a base station. Referring to FIG. 8, the apparatus 800 includes a processing component 822, a wireless transmission/reception component 824, an antenna component 826, and a signal processing part specific to a wireless interface, and the processing component 822 may further include at least one processor.

One of the processors in the processing component 822 may be configured to execute any of the random access methods described above.

Those skilled in the art will readily appreciate other embodiments of the present disclosure after considering the specification and practicing the content disclosed herein. The present disclosure is intended to cover any variations, uses or adaptations of the present disclosure that follow the general principles of the present disclosure and include common knowledge or customary techniques in the art that are not disclosed in the present disclosure. The specification and examples are to be considered exemplary only, and the true scope and spirit of the present disclosure are indicated by the following claims.

It should be understood that the present disclosure is not limited to the precise structures described above and shown in the drawings, and that various modifications and changes may be made without departing from the scope thereof. The scope of the present disclosure is limited only by the following claims.

## Claims

1. A random access method, wherein the method is performed by a terminal and comprises:
determining an initial random access occasion (RO) for transmitting a physical random access channel (PRACH) in an RO group, wherein the RO group comprises at least one RO; and
transmitting the PRACH to a base station starting from the initial RO.

2. The method according to claim 1, wherein the method further comprises:
receiving indication information sent by the base station, wherein the indication information is used to determine the initial RO.

3. The method according to claim 2, wherein the indication information is used to indicate multiple bit values, and determining the initial random access occasion (RO) for transmitting the physical random access channel (PRACH) in the RO group comprises:
in the RO group, determining an RO whose corresponding bit value is a first value as the initial RO.

4. The method according to claim 2, wherein the indication information is used to indicate a first number, and determining the initial random access occasion (RO) for transmitting the physical random access channel (PRACH) in the RO group comprises:
in the RO group, determining ROs of the first number according to an order of time domain positions from front to back; and
determining any one of the ROs of the first number as the initial RO.

5. The method according to claim 1 or 2, wherein determining the initial random access occasion (RO) for transmitting the physical random access channel (PRACH) in the RO group comprises:
in the RO group, determining the initial RO based on protocol agreement.

6. The method according to claim 5, wherein in the RO group, determining the initial RO based on the protocol agreement comprises any one of:
determining a first RO in the RO group as the initial RO;
determining any one RO in the RO group as the initial RO;
determining any RO except a last RO in the RO group as the initial RO.

7. The method according to claim 1 or 2, wherein determining the initial random access occasion (RO) for transmitting the physical random access channel (PRACH) in the RO group comprises:
determining the initial RO based on a number of ROs comprised in the RO group.

8. The method according to claim 7, wherein determining the initial RO based on the number of ROs comprised in the RO group comprises:
determining a second number based on the number of ROs comprised in the RO group, wherein the second number is smaller than the number of ROs;
in the RO group, determining ROs of the second number according to an order of time domain positions from front to back; and
determining any one of the ROs of the second number as the initial RO.

9. The method according to claim 8, wherein determining the second number based on the number of ROs comprised in the RO group comprises:
determining a quotient of the number of ROs and a second value, the second value being greater than 1; and
determining that the second number is equal to a third value, wherein the third value is a value obtained by rounding the quotient.

10. The method according to claim 8, wherein determining the second number based on the number of ROs comprised in the RO group comprises:
determining the second number based on a corresponding relationship between the number of ROs and the second number.

11. The method according to any one of claims 1 to 10, wherein the RO comprised in the RO group is a valid RO.

12. The method according to claim 1, wherein the method further comprises:
receiving configuration information sent by a base station, wherein the configuration information is used to configure one or more numbers of times of transmitting the PRACH;
determining a first number of times of transmitting the PRACH among the one or more numbers of times of transmitting the PRACH; and
based on the first number of times, determining the RO group in multiple RO groups, wherein different numbers of times of transmitting the PRACH correspond to different RO groups, and different RO groups comprise different numbers of ROs.

13. The method according to claim 12, wherein determining the first number of times of transmitting the PRACH among the number of times configured by the configuration information comprises:
determining a reference signal received power (RSRP) value;
determining one or more RSRP thresholds, wherein different RSRP thresholds correspond to different numbers of times of transmitting the PRACH; and
determining the first number of times based on a comparison result of the RSRP value and the RSRP threshold.

14. A random access method, wherein the method is performed by a base station and comprises:
in a random access occasion (RO) group, determining a termination RO, wherein the RO group comprises at least one RO, and the termination RO is an RO in the RO group for performing combined detection of a physical random access channel (PRACH); and
performing the combined detection of the PRACH on the termination RO.

15. The method according to claim 14, wherein the termination RO is any one of:
a last RO in the RO group;
a last RO in the RO group on which the PRACH is actually transmitted by a terminal.

16. The method according to claim 14 or 15, wherein the RO comprised in the RO group is a valid RO.

17. The method according to claim 14, wherein the method further comprises:
sending indication information to the terminal, wherein the indication information is used by the terminal to determine an initial RO.

18. The method according to claim 17, wherein the indication information is used to indicate any of:
multiple bit values, wherein the multiple bit values correspond one-to-one to each RO in the RO group;
a first number.

19. The method according to claim 14, wherein the method further comprises:
sending configuration information to a terminal, wherein the configuration information is used to configure one or more numbers of times of transmitting the PRACH.

20. A random access apparatus, wherein the apparatus is applied to a terminal, and comprises:
a first determining module, configured to determine an initial random access occasion (RO) for transmitting a physical random access channel (PRACH) in an RO group, wherein the RO group comprises at least one RO; and
a first sending module, configured to transmit the PRACH to a base station starting from the initial RO.

21. A random access apparatus, wherein the apparatus is applied to a base station, and comprises:
a second determining module, configured to determine a termination random access occasion (RO) in an RO group, wherein each of the RO group comprises at least one RO, and the termination RO is an RO in the RO group for performing combined detection of a physical random access channel (PRACH); and
a detection module, configured to perform the combined detection of the PRACH on the termination RO.

22. A computer-readable storage medium, wherein the storage medium stores a computer program, and the computer program is used to execute the random access method according to any one of claims 1-13 or 14-19.

23. A random access apparatus, comprising:
a processor; and
a memory for storing instructions executable by the processor;
wherein the processor is configured to execute the random access method according to any one of claims 1 to 13.

24. A random access apparatus, comprising:
a processor; and
a memory for storing instructions executable by the processor;
wherein the processor is configured to execute the random access method according to any one of claims 14 to 19.
